# EUROPÄISCHE PATENTANMELDUNG

(11) **EP 0 704 339 A1**
(43) Veröffentlichungstag der Anmeldung: **03.04.1996**
(21) Anmeldenummer: 95114415.3
(22) Anmeldetag: 14.09.1995
(51) Int. Cl.: B60N 2/22, B60N 2/24, B60N 2/44, B60N 3/00

(54) **Sitz für öffentliche Verkehrsmittel**

(30) Priorität: 15.09.1994 DE 44328745
(71) Anmelder: Paulisch GmbH & Co. KG, D-97816 Lohr (DE)
(72) Erfinder: Mankiewicz, Dieter, D-97804 Lohr (DE); Peters, Jens, D-70188 Stuttgart (DE); Ruhdorfer, Max, D-70188 Stuttgart (DE)
(74) Vertreter: Patentanwälte Ruff, Beier, Schöndorf und Mütschele

(57) **Zusammenfassung**

Ein Sitz für ein öffentliches Verkehrsmittel, beispielsweise für einen Eisenbahnwagen, enthält an einem feststehenden, etwa stuhlförmigen Sitzgestell ein in horizontaler Richtung verschiebbares Sitzflächenelement, an dessen hinterem Ende das untere Ende eines Rückenlehnenelements angelenkt ist. Das obere Ende des Rückenlehnenelements ist an einem vertikalen Teil des Sitzgestells unverstellbar befestigt. Bei Vorwärtsbewegen des Sitzflächenelements wird das Rückenlehnenelement in seinem unteren Bereich ebenfalls nach vorne verschwenkt. Dies kann durch eine gelenkartige Verbindung zweier Teile des Rückenlehnenelements erfolgen.

## Beschreibung

Die Erfindung geht aus von einem Sitz für öffentliche Verkehrsmittel wie Eisenbahnwagen, Straßenbahnwagen oder dergleichen.

Bei den Sitzen in geschlossenen Abteilen sind an einem Gestell die Sitzflächen nach vorne verschiebbar, während die Sitzlehnen, die an den Sitzflächen angelenkt sind, dabei mit ausgeschwenkt werden. Zu diesem Zweck sind sie in ihrem oberen Bereich an der Abteilwand angelenkt. Die Kopfstützen, die ebenfalls an der Abteilwand befestigt sind, bleiben dabei an ihrer Stelle. Voraussetzung für eine derartige Sitzanordnung ist das Vorhandensein von Abteilwänden, an denen die Sitzlehnen in Schienen angelenkt sind.

In Großraumwagen sind Sitze bekannt, die an einem am Boden montierten Sitzgestell angeordnet sind. Die Sitzfläche ist üblicherweise fest, während die Sitzlehne in ihrem unteren Bereich am Gestell oder der Sitzfläche angelenkt ist. Durch Betätigen einer Sperre, die beispielsweise in der Armlehne angebracht ist, können die Sitzlehnen nach hinten verschwenkt werden. Dadurch wird eine entspanntere Sitzposition eingenommen. Diese Art der Sitzverstellung hat jedoch den Nachteil, daß der Raum für den nächstfolgenden Sitz eingeschränkt wird. Beugt sich ein Passagier gerade vor, während der Vordermann seinen Sitz nach hinten verschwenkt, kann auch eine Verletzung vorkommen.

Der Erfindung liegt die Aufgabe zugrunde, einen Sitz für öffentliche Verkehrsmittel, insbesondere Eisenbahnen, Straßenbahnen, Omnibusse oder dergleichen zu schaffen, der einen günstigen Aufbau aufweist und vielfältig verwendbar ist.

Zur Lösung dieser Aufgabe schlägt die Erfindung einen Sitz mit den Merkmalen des Anspruchs 1 sowie einen Sitz mit den Merkmalen des Anspruchs 2 vor. Weiterbildungen der Erfindung sind Gegenstand von Unteransprüchen.

Durch die Verwendung eines Sitzgestells, an dem Sitzlehne und Sitzfläche das Gestell beidseits überragend angebracht sind, kann man bei Verwendung nur eines Typs von Sitzgestell unterschiedliche Sitze anbringen. Es ist möglich, das Sitzgestell so schmal zu machen, daß die hinter dem Sitz sitzende Person, die mit leicht gespreizten Beinen sitzt, einen erweiterten Knieraum aufweist. Es können an dem Sitzgestell unterschiedlich breite Sitzflächen und unterschiedlich breite Sitzlehnen angebracht werden.

Bei dem Sitz mit den in Anspruch 2 aufgeführten kann eine bequemere Sitzposition eingenommen werden, ohne daß die Person hinter dem Sitz beeinträchtigt wird. Die durch das Vorwärtsbewegen der Sitzfläche eingeschränkte Kniefreiheit betrifft die Person, die den Vorgang der Sitzvorstellung durchführt. Es kann daher nicht zu unbeabsichtigten Verletzungen kommen.

Die Bewegung der Sitzfläche von der Sitzlehne weg und natürlich auch wieder zurück kann eine einfache Verschiebung sein. Diese Verschiebung kann horizontal oder auch leicht ansteigend oder abfallend sein. Die Verschiebebewegung kann vorzugsweise längs einer geraden Linie erfolgen, denkbar sind aber auch Verschiebebewegungen längs gekrümmter Bahnen, so daß eine gewisse Verschwenkung mit auftritt.

Damit die Bewegung der Sitzfläche ohne Schwierigkeiten eintreten kann, können erfindungsgemäß Maßnahmen vorgesehen sein, die trotz der Anlenkung der Sitzfläche an der Sitzlehne eine solche Bewegung zulassen. Beispielsweise kann vorgesehen sein, daß die Sitzlehne in ihrer Längsrichtung verformbar ausgebildet ist. In diesem Fall wird der untere Teil der Sitzlehne nach vorne bewegt und dabei gleichzeitig die Sitzlehne über ihre Länge verformt. Die Verformung kann dabei über die gesamte Länge oder in bestimmten Bereichen konzentriert vorgesehen sein.

Insbesondere kann vorgesehen sein, daß die Sitzlehne zwei Teile aufweist, von denen der obere Teil an dem Sitzgestell befestigt ist, während der untere Teil an dem oberen Teil scharnierartig angelenkt ist.

Es kann dabei vorgesehen sein, daß die scharnierartige Anlenkung nicht auf eine Schwenkachse konzentriert ist, sondern sich die Verformung etwa in Art einer Zungenfeder auf einen größeren Teil verteilt.

Erfindungsgemäß kann in Weiterbildung vorgesehen sein, daß die Anlenkung zwischen der Sitzlehne und der Sitzfläche und/oder zwischen den beiden Teilen der Sitzfläche derart ausgebildet ist, daß sie einen Längenausgleich zuläßt. Zu diesem Zweck kann die Anlenkung so ausgebildet sein, daß einer der beiden Teile mit Zapfen in ein an dem jeweils anderen Teil angeordnetes Langloch eingreift.

Die Erfindung schlägt in Weiterbildung vor, an dem Sitz eine Armlehne anzuordnen, die einerseits an der Sitzlehne und andererseits an der Sitzfläche befestigt ist. Bei der Verstellung des Sitzes bewegen sich beide Befestigungspunkte der Armlehne, so daß die Armlehne ebenfalls in eine Position gebracht wird, die ein entspannteres Sitzen ermöglicht. Es kann erfindungsgemäß vorgesehen sein, daß die Armlehne in sich verformbar ausgebildet ist, beispielsweise nach Art einer Blattfeder ausgebildet ist.

Wenn zwei Sitze nebeneinander angeordnet werden, so kann erfindungsgemäß vorgesehen sein, daß zwischen zwei Sitzen eine Mittelarmlehne angeordnet ist, die ggf. breiter als die äußeren Armlehnen ausgebildet ist. Da die beiden Sitze unabhängig voneinander verstellt werden können und üblicherweise auch unabhängig voneinander verstellt werden, kann erfindungsgemäß vorgesehen sein, daß die Mittelarmlehne nicht in der gleichen Weise befestigt ist wie die sonstigen Armlehnen. Vielmehr kann diese unmittelbar an dem Sitzgestell eines oder beider Sitze angebracht werden. Es kann vorgesehen sein, daß die Mittelarmlehne die Form einer Armlehne bei einem etwa in einer mittleren Position verstellten Sitz aufweist.

Es kann erfindungsgemäß vorgesehen sein, daß das Sitzgestell mindestens teilweise innerhalb des Sitzflächenelements und/oder des Sitzlehnenelements angeordnet ist.

Das Sitzgestell kann vorzugsweise stuhlartig aufgebaut sein, d.h. einen horizontalen Teil zur Halterung der Sitzfläche und einen vertikalen Teil zur Halterung der Sitzlehne aufweisen.

Insbesondere kann vorgesehen sein, daß der vertikale Teil des Sitzgestells eine nach hinten gerichtete Vertiefung aufweist, die zur Vergrößerung eines Gepäcknetzes dienen kann.

An dem Sitzgestell kann ein Klapptisch angebracht sein. Dieser kann mit Hilfe eines einfachen Scharniers angelenkt werden, da das Sitzgestell bei Verstellung des Sitzes selbst unverändert bleibt.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig.1: eine schematische Seitenansicht eines Sitzes nach der Erfindung;
- Fig. 2: eine Seitenansicht des Sitzes in verstellter Position;
- Fig. 3: eine Frontansicht des Sitzes;
- Fig. 4: einen Schnitt durch den Sitz in seiner in Fig. 2 dargestellten Position;
- Fig. 5: einen der Fig. 4 entsprechenden Schnitt in der in Fig. 1 dargestellten Position;
- Fig. 6: einen schematischen Schnitt durch den Sitz längs seiner Längsmittelebene;
- Fig. 7: einen Horizontalschnitt durch den Sitz der Fig. 6 etwa längs Linie VII-VII in Fig. 6;
- Fig. 8: die Anordnung einer Mittelarmlehne.

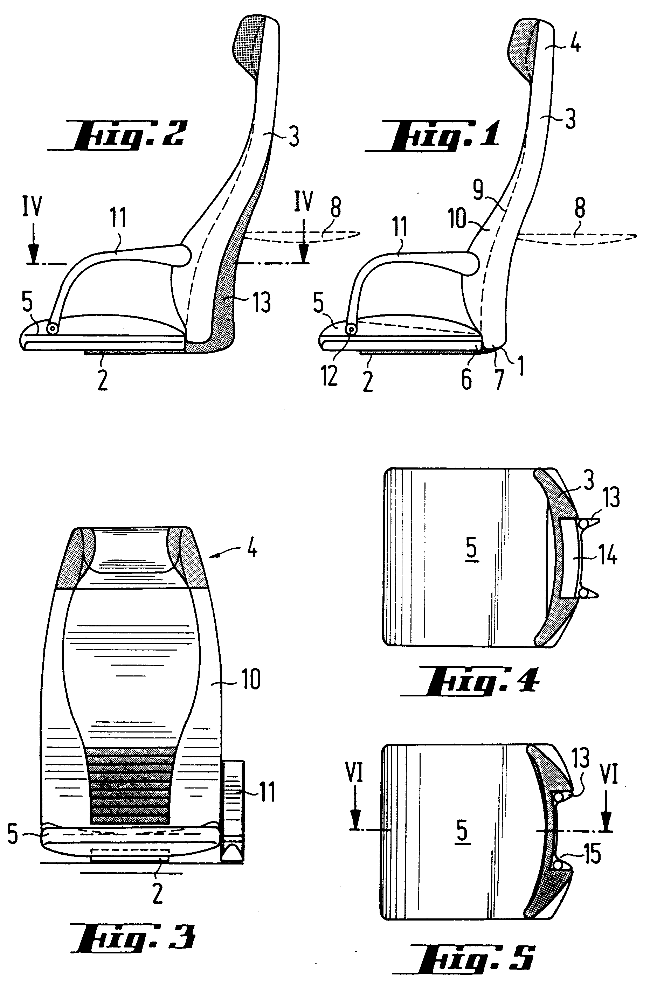

Der in Fig. 1 in Seitenansicht dargestellte Sitz ist an einem Sitzgestell 1 befestigt, von dem die Fig. 1 nur den horizontalen Teil 2 zeigt. Der Sitz enthält ein Sitzlehnenelement 3, das in seinem oberen Bereich einen Nackenteil 4 aufweist, sowie ein Sitzflächenelement 5. Das Sitzflächenelement 5 ist an dem horizontalen Teil 2 des Sitzgestells 1 verschiebbar angeordnet. Seine tatsächliche Position wird durch eine Rasteinrichtung arretiert, die mit Hilfe einer nicht dargestellten Auslösetaste überwunden werden kann.

Das Sitzflächenelement 5 ist mit seinem in Sitzrichtung hinteren Teil 6 an dem Sitzlehnenelement 3 in dessen unteren Bereich 7 angelenkt. Diese Anlenkung ist so ausgebildet, daß ein gewisser Längenausgleich möglich ist.

An der Rückseite des Sitzes ist ein gestrichelt dargestellter Klapptisch 8 befestigt, der in die dargestellte ausgefahrene Stellung gebracht werden kann. Durch Hochschwenken gelangt er in eine Stellung, in der er nicht stört.

Das Sitzlehnenelement 3 bildet eine Rückenlehne mit einem durch die gestrichelte Linie 9 dargestellten Verlauf. Beidseits sind schalenartige Flügel 10 vorhanden, die den Rücken seitlich abstützen können.

An diesem seitlichen Bereich der Rückenlehne 3 ist das eine Ende einer L-förmig ausgebildeten Armlehne 11 befestigt, deren anderes Ende im vorderen Bereich des Sitzflächenelements 5 an dessen Seite mit einem Gelenk 12 angelenkt ist.

Das Rückenlehnenelement 3 ist in seinem oberen Bereich starr und unverändert mit dem Sitzgestell 1 verbunden. Fig. 1 stellt die aufrechte Position des Sitzes dar. Aus dieser aufrechten Sitzposition kann der Sitz in eine flachere Ruheposition dadurch überführt werden, daß das Sitzflächenelement 5 in Sitzrichtung nach vorne verschoben wird, wie dies in Fig. 2 dargestellt ist. Bei dieser Vorwärtsbewegung des Sitzflächenelements 5 folgt der untere Bereich des Rückenlehnenelements 3 dieser Bewegung, während der obere Bereich der Rückenlehne 3 an dem Gestell 1 arretiert bleibt. Dies bedeutet, daß der Raum hinter dem Sitz nicht verkleinert wird. Bei der Vorwärtsschwenkbewegung des unteren Teils der Rückenlehne 3 wird nun auch ein vertikaler Teil 13 des Sitzgestells 1 sichtbar. Bei der Verschwenkung der Rückenlehne 3 wird die Rückseite dieser Rückenlehne 3 beidseits des Sitzgestells 1 nach vorne bewegt, so daß eine mit leicht gespreizten Beinen auf der im hinteren Sitz sitzende Person eine vergrößerte Kniefreiheit erhält.

Aus dem Vergleich der Figuren 1 und 2 kann man entnehmen, daß das untere Ende 7 des Rückenlehnenelementes 3 etwas nach oben gelangt. Damit dies möglich wird, kann die Anlenkung des Sitzflächenelements 5 an dem Rückenlehnenelement 3 so ausgebildet sein, daß dieser Längenausgleich zugelassen wird. Dies kann beispielsweise mit Hilfe eines Gelenks erfolgen, das einen in ein Langloch eingreifenden Zapfen aufweist. Die Bewegung des Sitzflächenelements 5 ist durch seine Führung an dem Sitzgestell 1 bestimmt.

Bei der Bewegung des Sitzes aus der in Fig. 1 dargestellten Position in die Ruheposition der Fig. 2 wird der Anlenkpunkt der Armlehne 11 an der Rückenlehne 3 etwas nach oben verschwenkt, während der Anlenkpunkt 12 der Armlehne 11 am Sitzflächenelement 5 etwas nach vorne verschoben wird. Dadurch streckt sich die Armlehne 11 etwas, wodurch eine entspanntere Haltung auch des auf der Armlehne 11 liegenden Unterarms möglich wird.

Der von der Erfindung vorgeschlagene Sessel enthält also ein Rückenlehnenelement 3, das in seinem oberen Element starr mit dem Sitzgestell 11 verbunden ist, in seinem unteren Bereich aber nicht. Die Verformung der Sitzlehne 3 kann entweder durch ein im oberen Bereich angeordnetes scharnierartiges Gelenk oder durch eine Gesamtverformung erfolgen.

Fig. 3 zeigt eine Frontansicht des Sitzes nach der Erfindung. Es ist zu sehen, daß der horizontale Teil 2 des Sitzgestells, an dem das Sitzflächenelement 5 gehaltert und geführt ist, wesentlich schmaler ist als die Sitzfläche 5 selbst. Auf beiden Seiten ragt das Sitzflächenelement 5 also deutlich über. Die Breite des Sitzgestells 11 kann beispielsweise halb so groß sein wie die Breite des Sitzflächenelements 5 und des Rückenlehnenelements 3 an seiner breitesten Stelle.

Fig. 3 zeigt, daß nur auf einer Seite des Sitzes eine Armlehne 11 angeordnet ist. Wenn zwei Sitze dicht nebeneinander angeordnet werden, so sind jeweils die äußeren Seiten der Sitze mit solchen Armlehnen 11 versehen.

Bei einzeln stehenden Sitzen können auch beide Seiten der Sitze mit je einer Armlehne 11 versehen werden.

Fig. 4 zeigt nun einen horizontalen Schnitt durch den Sitz der Fig. 2 etwa längs der Linie IV. Das Rückenlehnenelement 3 ist im Bereich dieses Schnitts nach vorne gerückt, so daß zwischen dem vertikalen Teil 13 des Sitzgestells und der Rückseite der Rückenlehne 3 ein Zwischenraum 14 entstanden ist. Auch hier ist zu sehen, daß die Breite des Sitzgestells nur etwa die Hälfte der Breite des Sitzes beträgt.

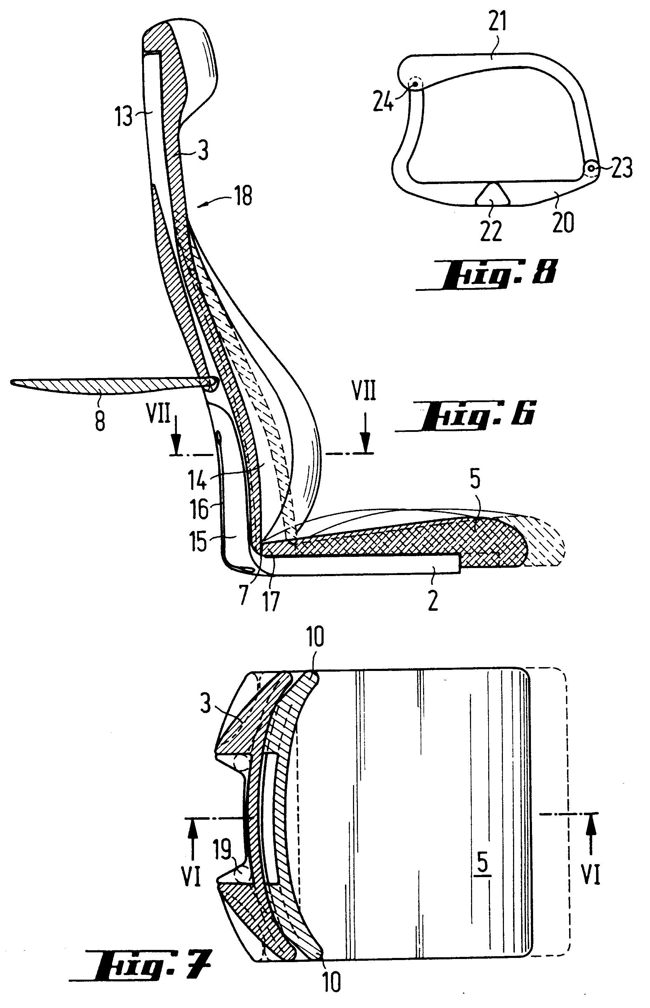

In Fig. 5 ist das Sitzflächenelement 5 wieder zurückgeschoben, entspricht also der Darstellung der Fig. 1. Die Ausnehmung in der Rückseite des Rückenelements 3 ist daher vollständig durch den vertikalen Teil 13 des Sitzgestells 1 ausgefüllt.

Gleichzeitig zeigt die Fig. 5, daß in diesem unteren Bereich des Sitzgestells 1 dessen vertikaler Teil 13 eine Vertiefung 15 aufweist, die durch ein Gepäcknetz verschlossen werden kann, so daß hier ein Gepäckabteil mit größerem Rauminhalt entsteht.

Fig. 6 zeigt nun in größerer Einzelheit den Aufbau des Sitzes nach der Erfindung anhand eines in einer vertikalen Mittelebene gelegten Schnitts.

Der vertikale Teil 13 des Sitzgestells 1 reicht praktisch über die gesamte Länge bzw. Höhe der Rückenlehne 3. Im unteren Rückbereich ist die Vertiefung 15 zu sehen, die durch das Gepäcknetz 6 abgeschlossen wird.

An der Rückseite des vertikalen Teils 13 des Sitzgestells 1 ist der Klapptisch 8 angelenkt, der, da das Sitzgestell 1 selbst nicht verändert wird, immer in die richtige Position aufgeklappt werden kann.

An der Vorderseite des vertikalen Teils 13 des Sitzgestells 1 liegt das Rückenlehnenelement 3 an. Im Bereich seines unteren Endes 7 ist es über ein einen Längenausgleich zulassenden Beschlag mit dem hinteren Ende 17 des Sitzflächenelements 5 verbunden.

Diese aufrechte Sitzposition ist in durchgezogenen Linien mit der schmalen Schraffur dargestellt.

Das Rückenlehnenelement 3 ist so ausgebildet, daß es an einer Stelle 18, die das Rückenlehnenelement 3 etwa im Verhältnis von 1:2 bis 1:3 teilt, ähnlich wie ein Scharnier verschwenkt werden kann. Diese Verschwenkbarkeit kann beispielsweise dadurch geschehen, daß beide Teile an dieser horizontal verlaufenden Stelle durch eine Art Scharnier miteinander verbunden sind. Ebenfalls möglich ist es, die beiden Teile über eine Art Blattfeder miteinander zu verbinden, die dann verbogen wird.

Wird nun das Sitzflächenelement 5 aus der in ausgezogenen Linien dargestellten Position nach vorne, in Fig. 6 nach rechts, verschoben, so gelangt der untere Teil des Rückenlehnenelements 3 unterhalb der erwähnten stelle 18 weiter nach vorne, bildet also den erwähnten Zwischenraum 14 zu der Vorderseite des Sitzgestells.

Fig. 7 zeigt den Schnitt längs Linie VII-VII in Fig. 6. Wiederum ist das Rückenlehnenelement 3 einmal in der aufrechten Position und einmal in der flacheren Position dargestellt.

Zur Verstärkung des vertikalen Teils 13 des Sitzgestells 1 können im Randbereich des vertikalen Teils 13 angeordnete Rohre oder Stangen 19 vorgesehen sein.

Sowohl aus Fig. 7 als auch den Figuren 4 und 5 ist die spezielle Form der Rückseite des Rückenlehnenelements 3 zu entnehmen, die eine Ausnehmung aufweist, in der in der aufrechten Position der vertikale Teil 13 des Sitzgestells 1 vollständig untergebracht ist. Obwohl das Sitzgestell 1 mit seinem vertikalen Teil 13 bis fast zum oberen Ende der Rückenlehne 3 reicht, kann ein Bezug für den Sitz diesen Teil einschließen, so daß optisch das Sitzgestell 3 nur wenig in Erscheinung tritt.

Die spezielle Form dieser schalenartigen Rückenlehne 3 an ihrer Rückseite führt zu einer guten Führung des Rückenlehnenelemehnts 3.

Wenn zwei Sitze direkt nebeneinander angeordnet werden sollen, so kann zwischen diesen eine in Fig. 8 dargestellte Armlehne 21 angeordnet werden. Die Armlehne 21 kann aus dem gleichen Material und in der gleichen Art hergestellt sein wie die Armlehnen 11. Sie wird jedoch nicht an dem Rückenlehnenelement 3 oder dem Sitzflächenelement 5 eines der beiden Sitze, zwischen denen sie angeordnet werden soll, befestigt. Statt dessen wird zwischen den beiden Sitzen ein Bügel 20 befestigt, beispielsweise mit Hilfe einer Querschiene 22. Die Querschiene 22 kann mit den Sitzgestellen beider Sitze verbunden werden. Der Bügel 20 ist so ausgebildet, daß er zwei Anlenkstellen 23, 24 bildet. Die Anlenkstellen sind so angeordnet, daß sie den Anlenkstellen einer anderen Armlehne 11 in einer mittleren Position des Sitzes entsprechen.

## Patentansprüche

1. Sitz für einen Eisenbahnwagen, Straßenbahnwagen oder dergleichen, mit
1.1 einem festen Sitzgestell (1),
1.2 einem an dem Sitzgestell (1) befestigten Rückenlehnenelement (3),
1.3 einem an dem Sitzgestell (1) befestigten Sitzflächenelement (5), wobei
1.4 das Sitzgestell (1) schmaler als das Rückenlehnenelement (3) und das Sitzflächenelement (5) ist und
1.5 die Befestigung an Stellen erfolgt, die gegenüber den seitlichen Begrenzungen des Sitzflächenelements (5) und des Rücklehnenelements (3) nach innen gerückt sind.

2. Sitz für Eisenbahnwagen, Straßenbahnwagen oder dergleichen, mit
2.1 einem festen Sitzgestell (1),
2.2 einem Rücklehnenelement (3), das
2.2.1 in seinem oberen Bereich unverstellbar an dem Sitzgestell (1) befestigt ist,
2.3 einem Sitzflächenelement (5), das
2.3.1 an dem Sitzgestell (1) in Richtung von der Rückenlehne (3) weg und zurück bewegbar befestigt ist und
2.3.2 an dem Rückenlehnenelement (3) in dessen unterem Bereich angelenkt ist.

3. Sitz nach Anspruch 2, mit den Merkmalen 1.4 und 1.5.

4. Sitz nach einem der vorhergehenden Ansprüche, bei dem das Rückenlehnenelement (3) in seiner Längsrichtung verformbar ausgebildet ist.

5. Sitz nach einem der vorhergehenden Ansprüche, bei dem das Rückenlehnenelement (3) aus zwei Teilen aufgebaut ist, von denen der obere Teil an dem Sitzgestell befestigt und der untere Teil scharnierartig an dem oberen angelenkt ist.

6. Sitz nach einem der Ansprüche 2 bis 5, bei dem die Anlenkung zwischen Rückenlehnenelement (3) und Sitzflächenelement (5) und/oder zwischen den beiden Teilen des Rückenlehnenelements (3) derart ausgebildet ist, daß sie einen Längenausgleich zuläßt.

7. Sitz nach einem der vorhergehenden Ansprüche, mit einer Armlehne, die an dem Rückenlehnenelement (3) und an dem Sitzflächenelement (5) befestigt ist.

8. Sitz nach Anspruch 7, bei dem die Armlehne (11) blattfederartig ausgebildet ist.

9. Sitz nach einem der vorhergehenden Ansprüche, mit einer zwischen zwei Sitzen angeordneten Mittelarmlehne (21), die an dem Sitzgestell (1) mindestens eines der Sitze unmittelbar befestigt ist.

10. Sitz nach einem der vorhergehenden Ansprüche, bei dem das Sitzgestell (1) stuhlartig einen horizontalen Teil (2) und einen vertikalen Teil (13) aufweist.

11. Sitz nach einem der vorhergehenden Ansprüche, bei dem das Sitzgestell (1) mindestens teilweise innerhalb des Sitzflächenelements (5) und/oder des Rückenlehnenelements (3) angeordnet ist.

12. Sitz nach Anspruch 10 oder 11, bei dem der vertikale Teil (13) des Sitzgestells (1) eine nach hinten geöffnete Vertiefung (15) aufweist.

13. Sitz nach einem der Ansprüche 10 bis 12, bei dem an dem vertikalen Teil (13) des Sitzgestells (1) ein Klapptisch (8) angebracht ist.
